# EUROPÄISCHE PATENTSCHRIFT

(11) **EP 2 643 187 B1**
(45) Veröffentlichungstag und Bekanntmachung des Hinweises auf die Patenterteilung: **12.04.2017**
(21) Anmeldenummer: 11776781.4
(22) Anmeldetag: 28.10.2011
(51) Int. Cl.: B60N 2/07, B08B 7/00, C21D 1/09

(54) **VERFAHREN UND VORRICHTUNG ZUM HERSTELLEN EINER GLEITSCHIENE EINER LÄNGSVERSTELLVORRICHTUNG EINES FAHRZEUGSITZES**
METHOD AND DEVICE FOR MAKING A SLIDING RAIL OF A LONGITUDINAL ADJUSTMENT DEVICE OF A VEHICLE SEAT
PROCÉDÉ ET DISPOSITIF POUR FABRIQUER UNE GLISSIÈRE D'UN DISPOSITIF DE DÉPLACEMENT LONGITUDINAL D'UN SIÈGE DE VÉHICULE

(30) Priorität: 23.11.2010 DE 102010061800
(43) Veröffentlichungstag der Anmeldung: 02.10.2013
(73) Patentinhaber: Johnson Controls Metals and Mechanisms GmbH & Co. KG, 42699 Solingen (DE)
(72) Erfinder: BECKER, Burckhard, 42655 Solingen (DE); FUCHS, Peter, 46539 Dinslaken (DE); GITTERMANN, Thomas, Wermelskirchen 42929 (DE); SCHMIDT, Harald, 52379 Langerwehe (DE)
(74) Vertreter: Bauer, Wulf
(86) Internationale Anmeldenummer: PCT/EP2011/069012
(87) Internationale Veröffentlichungsnummer: WO 2012/069277

(56) Entgegenhaltungen:
- WO-A1-02/083451
- WO-A1-2011/056923
- CN-A- 101 143 364
- DE-A1-102008 009 704
- FR-A1- 2 595 594
- US-A1- 2004 003 874

## Beschreibung

Die Erfindung bezieht sich auf ein Verfahren zum Herstellen einer Gleitschiene einer Längsverstellvorrichtung für einen Kraftfahrzeugsitz nach dem Oberbegriff des Anspruchs 1.

Ein derartiges Verfahren ist aus der FR 2 595 594 A1 bekannt. Zum Stand der Technik wird auf DE 10 2008 009 704 A1, CN 101143364 A, US 2004/0003874 A1, DE 10 2007 006 439 A1, DE 10 2004 061 140 A1, DE 198 12 045 A1, US 6,059,248 A1, US 4,863,289 A1, DE 31 43 431 A1 und DE 195 21 566 A1 verwiesen.

Eine Längsverstellvorrichtung, die sich unterhalb eines Kraftfahrzeugsitzes befindet, hat üblicherweise zwei Schienenpaare mit je zwei Gleitschienen. Die Gleitschienen werden Bodenschiene und Sitzschiene genannt. Sie liegen über Gleit- und/oder Wälzkörper aneinander und sind in Schienenlängsrichtung gegeneinander verschiebbar. Die Herstellung derartiger Gleitschienen erfolgt beispielsweise ausgehend von einem Stahlblechzuschnitt in mehreren formgebenden Schritten. Es gibt auch aus Leichtmetall, beispielsweise Aluminium, hergestellte Gleitschienen, siehe DE 69 223 258 T2 und DE 100 14 154 C1. Nachdem alle formgebenden Schritte der Herstellung abgeschlossen sind und die metallisch blanke Schiene vorliegt, wird diese lackiert. Vor dem Schritt des Lackierens kann noch ein Schritt des Aufbringens einer Voranstrichfarbe, also eines Primers, erfolgen. Üblicherweise erfolgt ein Phosphatieren. Erst danach wird das Schienenpaar zusammengebaut.

Die Lackschicht schützt die Schienenprofile, insbesondere gegen Rost. Auch ein Phosphatieren hat eine entsprechende Wirkung. Die Lackschicht gibt der Gleitschiene ein einheitliches Aussehen, allgemein wird schwarze Farbe für die Lackierung verwendet.

Unter dem Begriff Lackieren und Lack werden alle möglichen Verfahren des Anfärbens und/oder Überziehens und/oder Bedeckens mit einer Schicht verstanden. Der Lack kann eine beliebige Farbe aufweisen, er kann auch transparent sein. Der Lack überdeckt alle Oberflächen der Gleitschiene. Er überdeckt damit auch die Kontaktbahnen für die Gleit- und/oder Wälzkörper. Als Gleit- und/oder Führungskörper werden Kunststoffstangen, Beschichtungen, Kugeln, Wälzkörper in Tonnen- oder rollenform oder dergleichen verwendet.

Insbesondere bei der Verwendung von Wälzkörpern, beispielsweise Rollen, aber auch bei der Verwendung von Kugeln, Kegeln oder Tonnen, ist es notwendig, das Schienenpaar aus den zwei Gleitschienen gangbar zu machen. In einem Einlaufprozess wird die eine Gleitschiene gegenüber der anderen hin- und herverschoben. Erst danach wird das Laufverhalten akzeptabel.

Während dieses Einlaufprozesses platzen Lackpartikel ab. Dieses Abplatzen führt dazu, dass die Kontaktbahnen durch abgeplatzte Lackpartikel belegt werden. Sie sind somit verschmutzt. Dadurch wird das Laufverhalten der Längsverstellvorrichtung beeinträchtigt. Die Lackpartikel platzen unkontrolliert ab, so dass keine präzise begrenzten, metallischen Kontaktbahnen vorliegen. Vorteilhafterweise erfolgt der Einlaufprozess mit belasteten Schienenpaaren, beispielsweise Gewichtsbelastung. Dies führt zu einer verbesserten Entfernung der Lackpartikel.

Bei dem Verfahren nach dem Stand der Technik ist eine präzise Kontaktbahn nicht erreichbar. Verbleibende Lackpartikel stören das Laufverhalten. Die Lackpartikel sind typischerweise 2/100 mm dick, sie machen sich spürbar im praktischen Betrieb bemerkbar.

Hier setzt nun die Erfindung ein. Sie hat es sich zur Aufgabe gemacht, ein verbessertes Verfahren und eine entsprechende Vorrichtung zu geben, mit denen das Entfernen der Lackschicht von den Kontaktbahnen vereinfacht wird, um so auf Dauer das Laufverhalten zu verbessern.

Diese Aufgabe wird gelöst durch ein Verfahren mit den Merkmalen des Anspruchs 1.

Die Erfindung hat mehrere Vorteile. Ein Einlaufprozess, insbesondere ein Gangbarmachen der Längsführung ist nun nicht mehr notwendig. Die Längsführung hat ein komfortables Laufverhalten von Anfang an. Die Kontaktbahnen werden nicht mehr verschmutzt, sie sind metallisch blank. Sie können gut eingefettet werden. Dabei stören beim Einfetten die Abplatzer nicht.

Die Leistung des Lasers wird so gewählt, dass lediglich die Lackierschicht weggebrannt bzw. entfernt wird. Hierzu reichen häufig Laser mit einer Leistung unter 100 Watt, beispielsweise zwischen 20 und 80 Watt. Es können aber auch leistungsstärkere Laser (z.B. 1- 5 KW) verwendet werden, sie haben den Vorteil, dass der Laserstrahl in kürzerer Zeit über die gesamte Kontaktbahn geführt werden kann. Der Laserstrahl wird durch geeignete Mittel, beispielsweise bewegbare Ablenkspiegel, über die gesamte Kontaktbahn gefahren. Dies geschieht vorzugsweise kontinuierlich. Der Laserstrahl verweilt nur solange an einer Stelle der Kontaktbahn, wie für die Entfernung der Lackschicht notwendig ist. Der Laser kann über verschiedene Wege entlang der Kontaktbahn geführt werden, er kann beispielsweise in Längsrichtung der Kontaktbahn bewegt werden. Er kann dabei quer zu ihr oszillieren, kreisförmig umlaufen oder dergleichen.

Es wird vorzugsweise ein Laser mit einer Wellenlänge gewählt, die besonders gut vom Lack absorbiert wird. Es ist bekannt, dass die Lackschichten über die Wellenlänge gesehen unterschiedliches Absorptionsverhalten zeigen. Von den möglichen Lasern wird ein geeigneter und auch günstiger Laser ausgewählt, der möglichst mit einem Absorptionsmaximum des Lacks in seiner Wellenlänge übereinstimmt.

Bei dem Entfernen der Lackschicht können Dämpfe auftreten, es ist vorteilhaft, diese Dämpfe über geeignete Abführeinrichtungen wegzuleiten, beispielsweise abzusaugen. Dies kann mittels einer Absaughaube erfolgen.

Bei dem Wegbrennen der Laserschicht können auch verkohlte Reste auf der Kontaktbahn verbleiben, es ist vorteilhaft diese durch ein Abstreifmittel oder eine andere Reinigungsmethode wegzuwischen.

Bei der nach diesem Verfahren arbeitenden Vorrichtung wird erfindungsgemäß ein Laser eingesetzt, der durch Überstreichen der Kontaktbahn die Lackschicht auf der Kontaktbahn entfernt. Vorzugsweise werden Positioniereinrichtungen und/oder Erfassungseinrichtungen vorgesehen, die ein automatisches Erkennen der Lage der Kontaktbahn ermöglichen und es gestatten, den Laser genau auf die Kontaktbahn auszurichten. Hierzu kann es hilfreich sein, an der Gleitschiene gewisse Markierungen vorzusehen, die apparativ einfach erfassbar sind. Hierzu können beispielsweise ohnehin vorhandene Anschläge, die an den Enden der Kontaktbahn vorgesehen sind, benutzt werden. Sie verhindern, dass die Gleit- und/oder Wälzkörper in Längsrichtung aus dem Raum zwischen den beiden Gleitschienen sich entfernen können. Derartige Erfassungsvorrichtungen können beispielsweise optisch betrieben werden. Hierzu wird nur beispielhaft auf die Dissertation "Schweißgerechte Struktur- und Prozessstrategien im Flugzeugbau" Dr. Holger Gruss, 2008, Dresden und den DE-Aufsatz "Qualitätssicherung durch Online-Prozessüberwachung an lasergeschweißten T-Stößen", G. Tuber und A. Henrich, DVS - Berichte 208, ISBN-Nr. 3-87155-666-1, Seiten 59 bis 65, 2000 verwiesen.

Weitere Vorteile und Merkmale der Erfindung ergeben sich aus den Unteransprüchen sowie der nun folgenden Beschreibung von nicht einschränkend zu verstehenden Ausführungsbeispielen der Erfindung, die im Folgenden unter Bezugnahme auf die Zeichnung näher erläutert werden. In dieser Zeichnung zeigen:
- Fig. 1:: eine perspektivische Darstellung einer Gleitschiene mit Laser und Absaugeinrichtung,
- Fig. 2:: eine Stirnansicht eines Schienenpaares,
- Fig. 3:: eine prinzipielle Darstellung eines Lasers, einer Positioniereinrichtung und in schnittbildlicher Seitenansicht einer Gleitschiene,
- Fig. 4:: eine prinzipielle Darstellung in schnittbildlicher Queransicht eines Teilstücks einer Gleitschiene, und
- Fig. 5:: eine prinzipielle Darstellung wie Fig. 4, jedoch nun mit gehärteter Schicht.

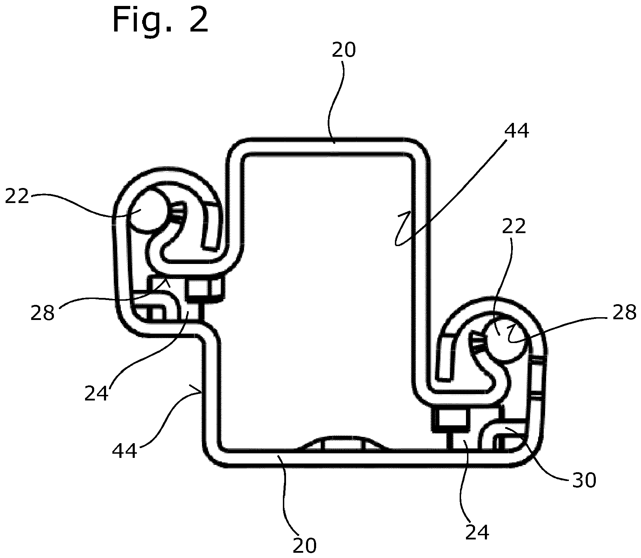

Bei dem erfindungsgemäßen Verfahren wird zunächst eine Gleitschiene 20 aus Metall hergestellt, beispielsweise aus einem Zuschnitt aus Stahlblech. In einer Alternative ist die Gleitschiene 20 aus Leichtmetall hergestellt. Die Gleitschiene 20 kann eine Bodenschiene oder eine Sitzschiene sein. Nach der Herstellung ist sie grundsätzlich einsatzfähig, könnte also in ein Kraftfahrzeug eingebaut werden. Sie wird jedoch noch eisenphosphatiert und in einem weiteren Schritt lackiert. Sie liegt dann in einer Form vor, wie sie nach dem Stand der Technik für den Zusammenbau mit einer weiteren Gleitschiene (siehe Figur 2) und Führungsmitteln in Form von Wälzkörpern, die in Figur 2 als Kugeln 22 und Rollen 24 ausgebildet sind, zu einem Schienenpaar geeignet ist. Ein derartiges Schienenpaar ist in Figur 2 dargestellt. Oben in Fig. 2 ist die Sitzschiene gezeigt, unten die Bodenschiene.

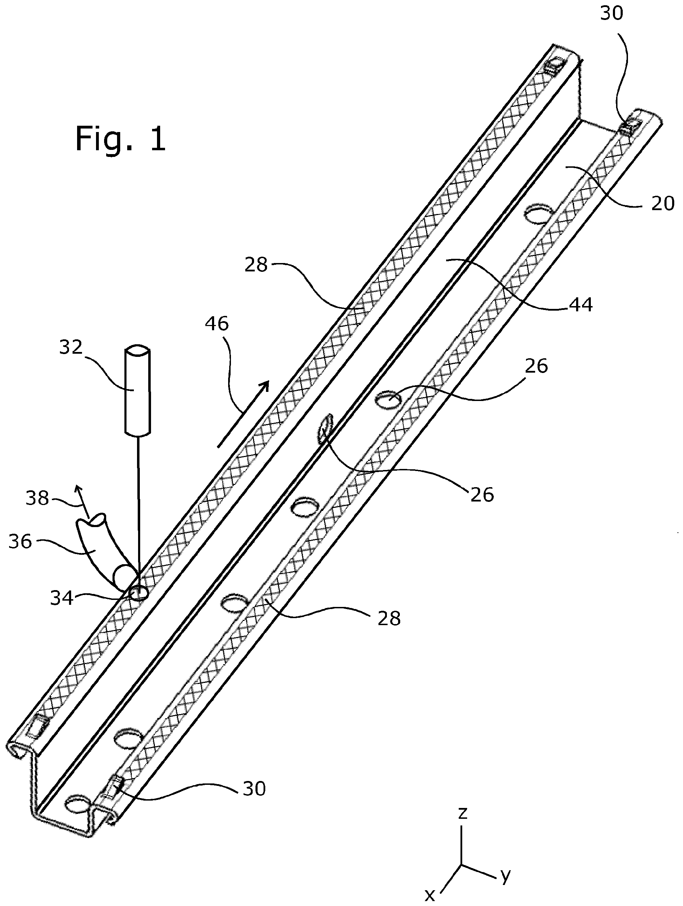

Die Gleitschiene gemäß Figur 1 hat mehrere Löcher 26, die unterschiedlichen Aufgaben, beispielsweise der Befestigung der Gleitschiene 20 an einer Bodengruppe eines Fahrzeugs oder an einem Untergestell eines Sitzes dienen, dienen. Sie hat weiterhin zwei Kontaktbahnen 28, die sich praktisch über die gesamte Schienenlänge erstrecken. In dieser Richtung sind die Gleitschienen eines Schienenpaares auch gegeneinander bewegbar. Am Ende jeder Kontaktbahn 28 befinden sich Anschläge 30. Sie begrenzen den Weg der Kugeln 22 oder Rollen 24.

Für die Beschreibung wird ein rechtshändiges x-y-z-Koordinatensystem verwendet. Die x-Achse erstreckt sich in Längsrichtung der Gleitschiene 20. Die y-Achse liegt in der Horizontalen, sie bildet mit der x-Achse eine horizontale Ebene. Die z-Achse erstreckt sich vertikal nach oben.

Wie Figur 1 zeigt, wird ein Laser 32 auf die Kontaktbahn 28 gerichtet. Sein Brennfleck 34 ist im Wesentlichen elliptisch, er hat etwa die Breite der Kontaktbahn 28 als große Abmessung der Ellipse und in einer Bewegungsrichtung 46, also in Längsrichtung der Kontaktbahn 28, eine kleine Abmessung. Er wird in Längsrichtung der Kontaktbahn 28, in Figur 2 ist dies eine Senkrechte zur Papierebene, bewegt. Die Bewegungsrichtung 46 stimmt mit der Richtung der x-Achse überein. Vorzugsweise hat der elliptische Brennfleck 34 eine große Abmessung, die 100 bis 140% der Breite der Kontaktbahn 28 entspricht. Vorzugsweise hat der elliptische Brennfleck 34 eine kleine Abmessung der Ellipse, die kleiner als 50%, vorzugsweise kleiner als 30% der großen Abmessung der Ellipse ist.

In unmittelbarer Nähe des Brennflecks 34 befindet sich ein Absaugmittel in Form eines Schlauchs 36. Im Sinne des Pfeils 38 wird Luft abgesaugt. Es ist vorteilhaft, an das frontseitige Ende des Schlauchs 36 eine Haube oder dergleichen anzuschließen, die die Kontaktbahn 28 übergreift und ein Loch für den Durchgang des Laserstrahls hat. Aufgrund der hohen Geschwindigkeit, mit der der Laserstrahl bewegt werden kann, ist es vorteilhaft, wenn das Absaugmittel einen Eintrittsschlitz aufweist, der die Länge der gesamten Kontaktbahn 28 hat. Dann muss der Schlauch 36 nicht mit bewegt werden. Entsprechend kann eine Haube konstruiert werden, die sich über die gesamte Länge der Kontaktbahn 28 erstreckt und die ein Fenster hat, das im Wesentlichen die Länge der Kontaktbahn aufweist und durch das der Strahl des Lasers 32 hindurchtreten kann.

Das Schienenpaar nach Figur 2 hat insgesamt vier Kontaktbahnen 28 pro Gleitschiene 20. Alle diese Kontaktbahnen sind durch Laser vom Lack befreit.

Mit dem Laser 32 muss nicht notwendigerweise auch die Phosphatschicht 42 entfernt werden. Wenn man als Phosphatschicht 42 ein eher weiches Material wählt, das möglicherweise auch Schmiereigenschaften hat, kann diese Schicht verbleiben. Notwendig ist das Abtragen der Lackschicht 44, da diese spröde ist und nach dem Stand der Technik in Bruchstücke zerfällt, die störend sind.

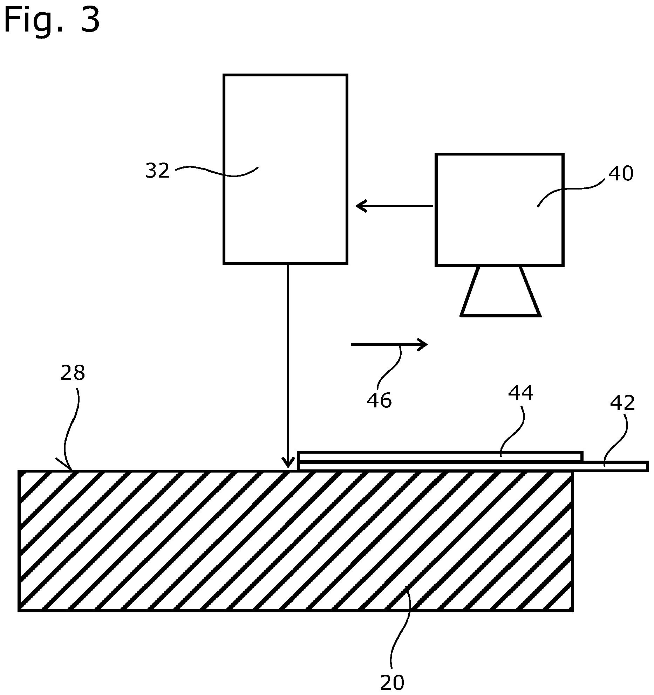

Figur 3 zeigt einen Schnitt in der y-z-Ebene. Sie zeigt das Zusammenwirken eines Lasers 32 mit einer Positioniereinrichtung 40. Diese erfasst die Lage der Kontaktbahn 28. Dies geschieht beispielsweise optisch, über ein Videobild und Bilderkennung. Dabei werden beispielsweise die Anschläge 30 erfasst. Der Laser 32 wird durch die Positioniereinrichtung 40 so ausgerichtet, dass er den Bereich zwischen diesen Anschlägen 30 abfährt, auf diese Weise wird die Kontaktbahn 28 freigebrannt. Sie wird anschließend mit einem Schmiermittel, beispielsweise Fett, belegt. Dieses übernimmt den Rostschutz.

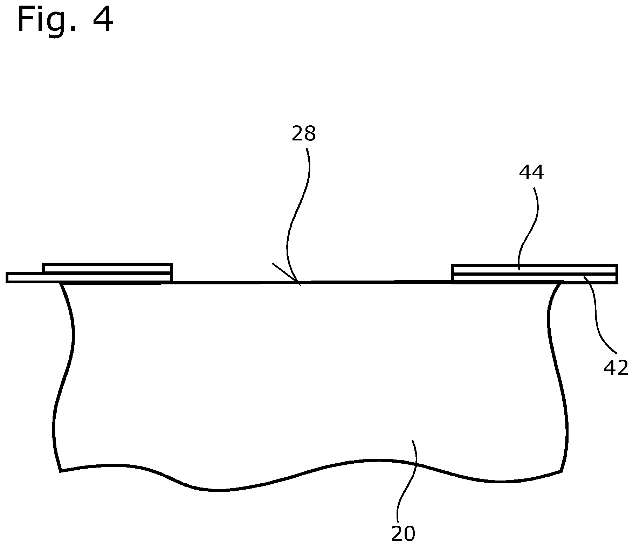

Figur 4 zeigt einen Schnitt in der y-z-Ebene. Sie zeigt eine Kontaktbahn 28 einer sonst nicht näher dargestellten Gleitschiene 20. Die Kontaktbahn 28 ist mit einer Phosphatschicht 42 bedeckt, diese erstreckt sich über die gesamte metallische Oberfläche der Gleitschiene 20. Auf der Phosphatschicht 42 befindet sich eine Lackschicht 44. Auch diese erstreckt sich über die gesamte Oberfläche der Gleitschiene 20. Sie erstreckt sich über die gesamte von der Phosphatschicht 42 bedeckte Oberfläche. Sie ist beispielsweise durch Elektrotauchlackierung aufgebracht und bei einer niedrigen Einbrenntemperatur, beispielsweise 150° C, eingebrannt. Die Schichtstärke kann im Bereich von 15-17 Mikrometern liegen. Verwendet wird beispielsweise das Produkt Aqua-EC 3000 der Firma Dupont.

In Fig. 4 ist zu erkennen, dass die Lackschicht 44 oberhalb der Kontaktbahn 28 nun entfernt ist. Das gleiche gilt für die Phosphatschicht 42 an der betreffenden Stelle. Seitlich (in y-Richtung) der Kontaktbahn 28 sind beide Schichten 42, 44 nach wie vor vorhanden.

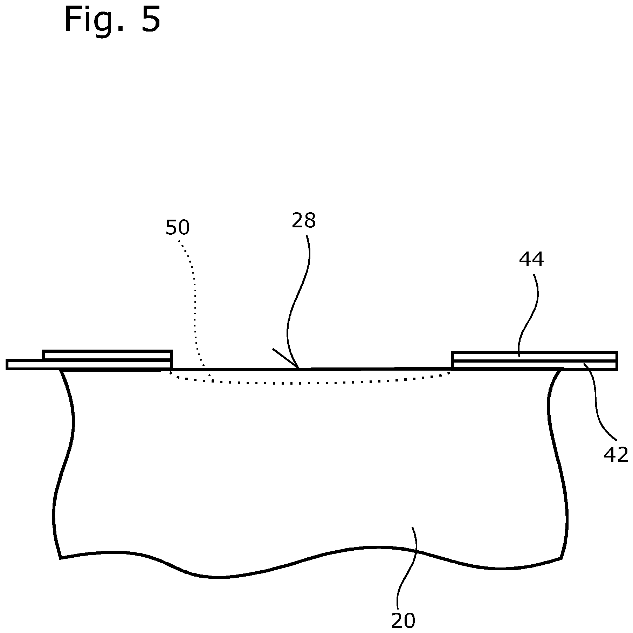

Figur 5 zeigt den Zustand nach einer Laserbehandlung, die mit einem Laser 32 größerer Leistung durchgeführt wurde. Mit diesem Laser 32 werden nicht nur die Phosphatschicht 42 und die Lackschicht 44 weggebrannt, es werden auch oberflächliche Bereiche des Metalls der Gleitschiene 20 hoch erhitzt. Diese Bereiche können aufgrund der Wärmeleitung sehr rasch wieder abkühlen. Es kommt zu einer Härtung, wie sie beispielsweise in den oben genannten US-Patentschriften näher beschrieben ist. Die Figur 5 zeigt eine gehärtete Schicht 50, die sich unterhalb der Oberfläche erstreckt und relativ dünn ist. Sie verleiht der Kontaktbahn 28 eine größere Härte oder insgesamt günstigere Eigenschaft. Dadurch ist die Kontaktbahn 28 insbesondere für die Belastung durch Rollen, Kugeln oder dergleichen geeignet.

## Patentansprüche

1. Verfahren zum Herstellen einer Gleitschiene (20) einer Längsverstellvorrichtung für einen Kraftfahrzeugsitz, wobei die Längsverstellvorrichtung mindestens ein Schienenpaar mit zwei Gleitschienen (20) und mit Gleit- und/oder Wälzkörpern aufweist, die zwei Gleitschienen (20) in ihrer Längsrichtung gegeneinander verschiebbar sind, die Gleit- und/oder Wälzkörper zwischen den Gleitschienen (20) angeordnet sind, und die Gleitschienen (20) Kontaktbahnen (28) aufweisen, mit denen die Gleit- und/oder Wälzkörper in Kontakt sind, das Verfahren weist die folgenden Verfahrensschritte auf:
- Herstellen einer Gleitschiene (20) und
- Lackieren der Gleitschiene (20)
**dadurch gekennzeichnet, dass** nach dem Schritt des Lackierens mindestens eine Kontaktbahn (28) mit einem Laser (32) bestrahlt wird und dadurch die auf der Kontaktbahn (28) befindliche Lackschicht (44) durch den Laser (32) entfernt wird.

2. Verfahren nach Anspruch 1, **dadurch gekennzeichnet, dass** der Laser (32) in Längsrichtung der Kontaktbahn (28) über die Kontaktbahn (28) geführt wird.

3. Verfahren nach einem der vorangegangenen Ansprüche, **dadurch gekennzeichnet, dass** der Laser (32) in einer Bewegungsrichtung (46) über die Kontaktbahn (28) geführt wird und zusätzlich in einer anderen Bewegungsrichtung (46) über die Kontaktbahn (28) hin- und her bewegt wird.

4. Verfahren nach einem der vorangegangenen Ansprüche, **dadurch gekennzeichnet, dass** ein Laser (32) verwendet wird, dessen Laserlicht eine Wellenlänge hat, die in der Lackschicht (44) möglichst gut absorbiert wird , insbesondere einer Wellenlänge großer Absorption der Lackschicht (44) entspricht.

5. Verfahren nach einem der vorangegangenen Ansprüche **dadurch gekennzeichnet, dass** weiterhin eine Absaugvorrichtung (36) vorgesehen ist, die Dämpfe, welche beim Wegbrennen der Lackschicht (44) entstehen, abführt.

6. Verfahren nach einem der vorangegangenen Ansprüche, **dadurch gekennzeichnet, dass** weiterhin eine Erfassungsvorrichtung und/oder Positioniereinrichtung (40) vorgesehen ist, die die Position der lackierten Kontaktbahn (28) erkennt und die den Laser (32) so steuert, dass er nur auf die lackierte Kontaktbahn (28) auftrifft.

## Claims

1. A method for producing a sliding rail (20) of a longitudinal adjustment device for a vehicle seat, the longitudinal adjustment device comprising at least one pair of rails with two sliding rails (20) and with sliding and/or rolling elements, the two sliding rails (20) being displaceable relative to each other in their longitudinal direction, the sliding and/or rolling elements being disposed between the sliding rails (20), and the sliding rails (20) having contact tracks (28) with which the sliding and/or rolling elements are in contact, the method comprising the following method steps:
- producing a sliding rail (20), and
- painting the sliding rail (20),
**characterized in that**, subsequent to the painting step, at least one contact track (28) is irradiated with a laser (32) and thereby, the paint layer (44) situated on the contact track (28) is removed by the laser (32).

2. The method according to claim 1, **characterized in that** the laser (32) is guided over the contact track (28) in the longitudinal direction of the contact track (28).

3. The method according to any one of the preceding claims, **characterized in that** the laser (32) is guided over the contact track (28) in one direction of movement (46) and is additionally moved back and forth over the contact track (28) in another direction of movement (46).

4. The method according to any one of the preceding claims, **characterized in that** a laser (32) is used whose laser light has a wavelength that is absorbed as well as possible in the paint layer (44), particularly corresponds to a wavelength with a large degree of absorption of the paint layer (44).

5. The method according to any one of the preceding claims, **characterized in that** an exhaust device (36) is furthermore provided which withdraws the vapors produced when the paint layer (44) is being burnt off.

6. The method according to any one of the preceding claims, **characterized in that** a detection device and/or positioning device (40) is furthermore provided which recognizes the position of the painted contact track (28) and which controls the laser (32) in such a way that it only hits the painted contact track (28).

## Revendications

1. Procédé de fabrication d'une glissière (20) d'un dispositif de réglage longitudinal pour un siège de véhicule automobile, dans lequel ledit dispositif de réglage longitudinal présente au moins une paire de rails comprenant deux glissières (20) et des corps de glissement et/ou de roulement, lesdites deux glissières (20) sont déplaçables l'une par rapport à l'autre dans leur direction longitudinale, lesdits corps de glissement et/ou de roulement sont agencés entre les glissières (20), et les glissières (20) présentent des pistes de contact (28) avec lesquelles les corps de glissement et/ou de roulement sont en contact, le procédé présente les étapes de procédé suivantes:
- fabrication d'une glissière (20) et
- vernissage de ladite glissière (20),
**caractérisé par le fait que**, après l'étape du vernissage, au moins une piste de contact (28) est exposée aux rayons d'un laser (32) enlevant ainsi, au moyen du laser (32), la couche de vernis (44) présente sur la piste de contact (28).

2. Procédé selon la revendication 1, **caractérisé par le fait que** l'on fait passer le laser (32) sur la piste de contact (28) dans la direction longitudinale de la piste de contact (28).

3. Procédé selon l'une quelconque des revendications précédentes, **caractérisé par le fait que** l'on fait passer le laser (32) sur la piste de contact (28) dans une direction de mouvement (46) et que, en sus, il est animé d'un mouvement de va-et-vient sur la piste de contact (28) dans une autre direction de mouvement (46).

4. Procédé selon l'une quelconque des revendications précédentes, **caractérisé par le fait que** l'on utilise un laser (32) dont la lumière laser présente une longueur d'onde qui est absorbée au mieux dans la couche de vernis (44), en particulier correspond à une longueur d'onde d'absorption importante de la couche de vernis (44).

5. Procédé selon l'une quelconque des revendications précédentes, **caractérisé par le fait que**, en outre, un dispositif d'aspiration (36) est prévu qui évacue des vapeurs produites lorsque la couche de vernis (44) est enlevée en étant brûlée.

6. Procédé selon l'une quelconque des revendications précédentes, **caractérisé par le fait que**, en outre, un dispositif de détection et/ou dispositif de positionnement (40) est prévu qui détecte la position de la piste de contact (28) vernie et qui commande le laser (32) de manière à ce qu'il ne rencontre que la piste de contact (28) vernie.
